# EUROPÄISCHE PATENTSCHRIFT

(11) **EP 0 894 278 B1**
(45) Veröffentlichungstag und Bekanntmachung des Hinweises auf die Patenterteilung: **03.11.2004**
(21) Anmeldenummer: 97922839.2
(22) Anmeldetag: 16.04.1997
(51) Int. Cl.: G02B 21/00, G02B 27/10

(54) **PUNKTLICHTQUELLE FÜR EIN LASERSCANMIKROSKOP UND VERFAHREN ZUM EINKOPPELN VON MINDESTENS ZWEI LASERN UNTERSCHIEDLICHER WELLENLÄNGE IN EIN LASERSCANMIKROSKOP**
POINT LIGHT SOURCE FOR A LASER SCANNING MICROSCOPE AND PROCESS FOR FEEDING AT LEAST TWO LASER BEAMS OF DIFFERENT WAVELENGTHS INTO A LASER SCANNING MICROSCOPE
SOURCE LUMINEUSE PONCTUELLE POUR MICROSCOPE A BALAYAGE LASER, ET PROCEDE POUR INJECTER AU MOINS DEUX FAISCEAUX LASER DE LONGUEURS D'ONDE DIFFERENTES DANS UN TEL MICROSCOPE

(30) Priorität: 16.04.1996 DE 19614929; 17.08.1996 DE 19633185
(43) Veröffentlichungstag der Anmeldung: 03.02.1999
(73) Patentinhaber: Leica Microsystems Heidelberg GmbH, 69120 Heidelberg (DE)
(72) Erfinder: ENGELHARDT, Johann, Dr., D-76669 Bad Schönborn (DE); ULRICH, Heinrich, Dr., D-69121 Heidelberg (DE)
(74) Vertreter: Stamer, Harald
(86) Internationale Anmeldenummer: PCT/DE1997/000762
(87) Internationale Veröffentlichungsnummer: WO 1997/039375

(56) Entgegenhaltungen:
- EP-A- 0 363 221
- US-A- 5 081 349
- US-A- 5 106 192
- US-A- 5 410 371
- PROCEEDINGS OF THE INTERNATIONAL RELIABILITY PHYSICS SYMPOSIUM, ATLANTA, MAR. 23 - 25, 1993, Nr. SYMP. 31, 23.März 1993, INSTITUTE OF ELECTRICAL AND ELECTRONICS ENGINEERS, Seiten 380-385, XP000482252 MONTANGERO P ET AL: "A SOM APPROACH TO THE FAILURE PHYSICS OF OPTOELECTRONIC DEVICES"

## Beschreibung

Die Erfindung betrifft eine Punktlichtquelle für ein Laserscanmikroskop, wobei mindestens zwei Laser mit unterschiedlichen Wellenlängen in das Mikroskop einkoppelbar sind. Des weiteren betrifft die Erfindung ein Verfahren zum Einkoppeln von mindestens zwei Lasern unterschiedlicher Wellenlänge in ein Laserscanmikroskop.

Aus EP-A-0 363 221 ist ein opthtalmologisches Gerät mit einer Punktlichtquelle gemäß dem Obergegriff des Anspruchs 1 bekannt.

Eine ähnliche Punktlichtquelle, bei der jedoch die Laser alle mittels Lichtleitfasern an den Strahlvereiniger angekoppelt sind und die als optisches Messgerät auf grosse Entfernung Anwendung findet, ist in US-A-5 106 192 beschrieben.

Lichtquellen der hier in Rede stehenden Art werden bei Lasernscanmikroskopen, insbesondere bei der Konfokalmikroskopie, benötigt. Dabei geht es vor allem darum, im Rahmen einer Mehrfarbanwendung Laser-Licht unterschiedlicher Wellenlänge in das Mikroskop einzukoppeln. Dies hat unter ganz besonderer Berücksichtigung der Justierbarkeit des Lasers und unter Berücksichtigung der Stabilität der Justage zu erfolgen.

Aus der Praxis sind zwei unterschiedliche Ansätze zur Mehrfarbanwendung bei Laserscanmikroskopen bekannt. Im Rahmen einer ersten Alternative wird ein Laser (ArKr) mit mehreren simultanen Wellenlängen verwendet. Dabei ist systemimmanent, daß dort alle Laserlinien - per se - aufeinander justiert sind. Die Selektion der Wellenlängen sowie die Leistungseinstellung wird dabei durch einen AOTF (Acousto Optical Tunable Filter) erreicht. Folglich läßt sich jede Laserlinie unabhängig von den anderen kontinuierlich in ihrer Leistung auch bis zu sehr niedrigen Leistungen einstellen. Die Einkopplung erfolgt jeweils durch eine Single-Mode-Faser. Der Vorteil der voranstehenden Einkopplungsmöglichkeit liegt in einem kompakten Scanner, in einer absoluten Justierstabilität sowie in einer Entkopplung der durch die Laserkühlung verursachten Vibration.

Die voranstehend geschilderten Vorteile bringen jedoch auch ganz erhebliche Nachteile mit sich. Ein ArKr-Laser umfaßt - wie bereits zuvor erwähnt - mehrere Laserlinien simultan. Da diese in einem Resonator erzeugt werden, bewirkt dies stets eine Instabilität der Einzellinien, zumal im Laser nur die Gesamtleistung durch eine Regelung konstant gehalten wird. Das hier auftretende Rauschen kann je nach Einstellung der Gesamtleistung bis zu 10 Prozent "Peak to Peak" betragen und verringert somit die Bildqualität bezüglich des Signal/Rauschverhältnisses. Im Gegensatz dazu erreichen Einlinienlaser gerade einmal 1 Prozent Rauschen.

Des weiteren ist das System bei Ausfall des - singulären - Lasers komplett funktionsuntüchtig. Die verfügbaren Laserlinien hängen stets vom laseraktiven Gas und dessen Mischung ab. Da sich diese über die Lebensdauer des Lasers verändert, findet eine Beeinträchtigung sämtlicher Laserlinien im Zeitverlauf statt. Schließlich sind nur die Laserlinien der verwendeten Gasmischung verfügbar, so daß hier stets eine Auswahleinschränkung vorliegt.

Bei einem weiter aus der Praxis bekannten System werden stets mehrere Laser direkt in ein Laserscanmikroskop eingekoppelt. Im Falle eines Laserdefekts fällt lediglich eine Laserlinie aus. Die anderen Laserlinien bleiben entsprechend der Funktion dieser Laser verfügbar. Die Laserleistung weist aufgrund des Single-Line-Betriebs eine hohe Stabilität auf. Single-Line-Laser verfügen über eine höhere Lebensdauer im Gegensatz zu Lasern mit mehreren Wellenlängen. Die Laserleistung läßt sich für jede Laserlinie ohne weitere Hilfsmaßnahmen optimal auf die experimentellen Bedingungen abstimmen.

Auch die voranstehend genannte Einkopplung mehrerer Laser in ein Laserscanmikroskop weist erhebliche Nachteile auf, da nämlich die Laserstrahlen aus den unterschiedlichen Lasern auf ein und denselben Punkt in genau der gleichen Richtung fokussiert bzw. justiert werden müssen. Dabei existieren vier Freiheitsgrade pro Laser. Erfolgt die Fokussierung bzw. Justierung nicht in hinreichendem Maße, so sind die mit den unterschiedlichen Laserlinien aufgenommenen Bilder nicht deckungsgleich. Die Analyse deckungsgleicher Bilder ist aber gerade der Zweck einer Mehrfachanregung der hier in Rede stehenden Art.

Ein weiterer Nachteil der Verwendung mehrerer unterschiedlicher Laser ist darin zu sehen, daß herkömmliche Strahlvereinigungsanordnungen und Justagen häufig nachjustiert werden müssen. Dieser Vorgang ist äußert kompliziert, da in den herkömmlichen Anordnungen die verschiedenen Freiheitsgrade der Justierungen nicht ausreichend voneinander entkoppelt sind.

So führt eine Winkeländerung stets auch zu einer Positionsänderung. Folglich wird das Justierziel erst nach vielen Justierzyklen erreicht, so daß die Justage wohl kaum vom Benutzer selbst durchgeführt werden kann. Eine besondere Serviceleistung des Geräteherstellers ist somit zwingend erforderlich. Schließlich sind mehrere Laser gemeinsam stets teurer als ein einzelner Laser mit mehreren Wellenlängen.

Der Erfindung liegt nun die Aufgabe zugrunde, eine Punktlichtquelle für ein Laserscanmikroskop anzugeben, die die Vorteile der beiden zuvor genannten Systeme - Multilinelaser und mehrere Einlinienlaser - nutzt und deren Nachteile zumindest weitestgehend ausschließt. Des weiteren soll ein Verfahren zur Nutzung einer solchen Punktlichtquelle angegeben werden.

Die erfindungsgemäße Punktlichtquelle löst die voranstehende Aufgabe durch die Merkmale des Patentanspruches 1. Danach ist eine Punktlichtquelle für ein Laserscanmikroskop gekennzeichnet durch mindestens zwei Laserlichtquellen, die in einen Strahlvereiniger einkoppeln, und durch eine mittelbar oder unmittelbar vom Strahlvereiniger zum Mikroskop führende Lichtleitfaser.

Erfindungsgemäß ist hier erkannt worden, daß die Verwendung von mindestens zwei unabhängigen Laserlichtquellen und somit von mindestens zwei unterschiedlichen Lasern die zuvor erörterten Vorteile mit sich bringt. Die damit verbundenen Nachteile lassen sich - ebenfalls erfindungsgemäß - dadurch ausschalten, daß bereits vor der Einkopplung in das Laserscanmikroskop eine Strahlvereinigung stattfindet, so daß von dort aus aufeinander justierte Laserstrahlen bzw. Laserlinien mit mehreren Wellenlängen - im Sinne eines Multilinelasers - zur Verfügung stehen, wie dies bei einem Laser mit mehreren simultan auftretenden Wellenlängen der Fall ist.

Nach der Strahlvereinigung werden die vereinten Laserlinien simultan über eine Lichtleitfaser zum Mikroskop geführt und dort - wie bei einem Laser mit mehreren simultan auftretenden Wellenlängen - eingekoppelt. Folglich sind sämtliche Laserlinien ab der Strahlvereinigung in die Faser automatisch aufeinander justiert. Eine Justage bzw. Einstellung findet somit ausschließlich in dem Strahlvereiniger statt, der sich als kompaktes Bauteil realisieren läßt. Eine besondere Justage auf die Einkopplung des Laserscanmikroskops ist jedenfalls nicht erforderlich.

Zur Minimierung des konstruktiven bzw, apparativen Aufwandes, insbesondere auch zur optimalen Nutzung des verfügbaren Raumes, koppelt einer der Laser unmittelbar in den Strahlvereiniger ein. Mit anderen Worten ist dieser Laser unmittelbar dem Strahlvereiniger zugeordnet. Mindestens ein weiterer Laser wird über eine Lichtleitfaser in den Strahlvereiniger eingekoppelt, wobei es sich hier um eine Single-Mode-Faser handeln kann, Neben dem unmittelbar in den Strahlvereiniger einkoppelnden Laser können im konkreten und in ganz besonders vorteilhafter Weise zwei oder drei weitere Laser jeweils über eine gesonderte Lichtleitfaser in den Strahlvereiniger einkoppeln. Dabei lassen sich Laserlinien mit unterschiedlichen Wellenlängen einkoppeln, so daß sich eine Mehrfarbanwendung ergibt.

Bei dem Strahlvereiniger kann es sich um ein herkömmliches, aus dem Stand der Technik bekanntes Bauteil bzw. um eine entsprechende Anordnung handeln. So könnte der Strahlvereiniger als dichroitischer Strahlvereiniger mit Teilerspiegelrt unterschiedlicher Transmissions-/Reflexions-Charakteristiken ausgeführt sein. Jede beliebige Anordnung zur Strahlvereinigung ist jedenfalls verwendbar, wobei eine monolithische Anordnung aus Gründen der Stabilität, der Präzision, der einfacheren Fertigung, aber auch aus Gründen eines geringeren Platzbedarfs zu bevorzugen ist. Eine Austauschbarkeit des Strahlvereinigers gegen geometrisch analoge, physikalisch jedoch anders "getrimmte" Einrichtungen zur Strahlvereinigung ist realisierbar.

In ganz besonders vorteilhafter Weise ist der Strahlvereiniger in einem Gehäuse angeordnet. Der unmittelbar in den Strahlvereiniger einkoppelnde Laser ist gegebenenfalls über einen besonderen Adapterkopf am Gehäuse festgelegt bzw. koppelt unmittelbar am Gehäuse über den Adapterkopf in den Strahlvereiniger ein. Die weiteren Laser koppeln jeweils über eine Lichtleitfaser in das Gehäuse und somit in den darin angeordneten Strahlvereiniger und dessen Strahlengang ein.

Das Gehäuse ist vorzugsweise aus Metall hergestellt. Eine Fertigung aus Kunststoff ist insbesondere dann von Vorteil, wenn sich das Gehäuse spritzgußtechnisch herstellen läßt.

Zur Auswahl und individuellen Einstellung der Linienleistung ist dem Strahlvereiniger in weiter vorteilhafter Weise ein AOTF (Acousto Optical Tunable Filter) nachgeschaltet. Dieser AOTF ist zum Erhalt eines kompakten Moduls ebenfalls innerhalb des Gehäuses angeordnet. Mit Hilfe des AOTF lassen sich unter anderem auch etwaige Einkopplungsverluste kompensieren.

Dem Strahlvereiniger kann des weiteren ein AOM (Acousto Optical Modulator) nachgeschaltet sein, der zur Strahlmodulation und schnellen Strahlabschaltung dient. Auch hier bietet sich die Anordnung innerhalb des Gehäuses an, zumal sich dadurch ein kompaktes Modul insgesamt realisieren läßt.

Schließlich ist es hinsichtlich der beanspruchten Punktlichtquelle von ganz besonderem Vorteil, wenn die vom Strahlvereiniger zum Mikroskop führende Lichtleitfaser, d.h. der Faserkoppler, als Single-Mode-Faser ausgeführt ist. Dadurch wird erreicht, daß sich kleinere Dejustagen lediglich durch geringe Einkopplungsverluste in die Faser auswirken. Wie bereits zuvor erwähnt, lassen sich diese geringen Einkopplungsverluste und damit verbundene Veränderungen der Linienleistungsverhältnisse durch Verwendung eines AOTF kompensieren.

Das erfindungsgemäße Verfahren zum Einkoppeln von mindestens zwei Lasern unterschiedlicher Wellenlänge in ein Laserscanmikroskop löst die eingangs genannte Aufgabe durch die Merkmale des Patentanspruches 10. Danach ist ein solches Verfahren dadurch gekennzeichnet, daß die Laser gemeinsam als singuläre Punktlichtquelle mit simultanen Wellenlängen bzw. Laserlinien gemeinsam als singuläre Punktlichtquelle in das Mikroskop eingekoppelt werden.

Dabei ist es von ganz besonderem Vorteil, wenn bereits vor der Einkopplung in das Mikroskop - in einem unabhängigen Bauteil - eine Strahlvereinigung stattfindet. Von dort aus wird dann über eine vorzugsweise als Single-Mode-Faser ausgeführte Lichtleitfaser in das Mikroskop eingekoppelt.

Im Rahmen des hier beanspruchten Verfahrens könnte einer der Laser unmittelbar und mindestens ein weiterer Laser über eine Lichtleitfaser in das gekapselte Bauteil - Strahlvereiniger - eingekoppelt werden. Vor der Einkopplung in das Mikroskop könnte eine Auswahl und individuelle Einstellung der Linienleistung mittels eines AOTF (Acousto Optical Tunable Filter) stattfinden.

Ebenso könnte vor der Einkopplung in das Mikroskop eine Strahlmodulation und ggf. schnelle Strahlabschaltung mittels eines AOM (Acousto Optical Modulator) möglich sein. Beide Optionen lassen sich zugunsten einer kompakten Ausgestaltung der Punktlichtquelle bzw. des Punktlichtmoduls innerhalb des Gehäuses vorsehen.

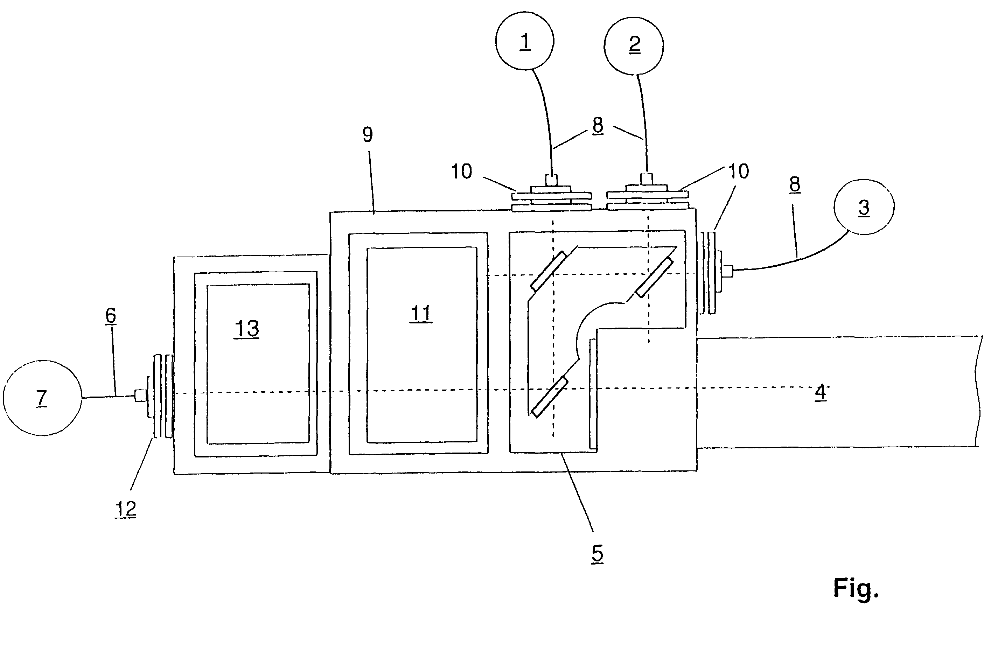

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 12 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung werden auch im allgemeinen bevorzugte Ausgestaltungen und Weiterbildungen der Lehre erläutert. In der Zeichnung zeigt
die einzige Figur eine schematische Darstellung einer erfindungsgemäßen Punktlichtquelle mit insgesamt vier Lasern.

Das in der einzigen Figur dargestellte Modul läßt sich insgesamt als Punktlichtquelle für ein Laserscanmikroskop bzw. für ein Konfokalmikroskop definieren, wobei hier insgesamt vier Laser 1, 2, 3, 4 vorgesehen sind. Die Laser 1, 2, 3, 4 weisen unterschiedliche Wellenlängen auf.

Erfindungsgemäß ist ein Strahlvereiniger 5 vorgesehen, in den die Laser 1, 2, 3, 4 mit ihren Laserstrahlen einkoppeln. Die "optische Ankopplung" aller Laser 1, 2, 3, 4 an ein nachgeschaltetes AOTF (Acousto Optical Tunable Filter) 11 erfolgt ausschließlich über den unteren Teilerspiegel des Strahlvereinigers 5. Vom Strahlvereiniger 5 führt ein gemeinsamer Strahlengang durch den AOTF 11 und ein AOM (Acousto Optical Modulator) 13 über eine Lichtleitfaser 6 zu dem in der Figur lediglich angedeuteten Laserscanmikroskop 7.

Die einzige Figur zeigt besonders deutlich, daß einer der Laser, nämlich der mit dem Bezugszeichen 4 gekennzeichnete Laser, unmittelbar in den Strahlvereiniger 5 einkoppelt. Die anderen Laser 1, 2 und 3 koppeln jeweils über eine Lichtleitfaser 8 in den Strahlvereiniger 5 ein.

Der Strahlvereiniger 5 ist in einem Gehäuse 9 angeordnet. Entsprechend ist der unmittelbar in den Strahlvereiniger 5 einkoppelnde Laser 4 direkt mit dem Gehäuse 9 verbunden. Ein entsprechender Adapterkopf ist hier der Einfachheit halber nicht dargestellt.

Die weiteren Laser 1, 2 und 3 führen über die Lichtleitfasern 8 durch die Gehäusewandung hindurch bzw. durch entsprechende Anschlüsse 10 in das Gehäuseinnere, wobei dort eine Einkopplung in den Strahlvereiniger 5 stattfindet.

Wie bereits zuvor erwähnt, ist gemäß einziger Figur dem Strahlvereiniger 5 innerhalb des Gehäuses 9 ein AOTF (Acousto Optical Tunable Filter) 11 nachgeschaltet, wobei dieser AOTF 11 zur Auswahl und individuellen Einstellung der Linienleistung dient. Dem AOTF 11 ist wiederum ein AOM (Acousto Optical Modulator) 13 nachgeschaltet, der zur Strahlmodulation und schnellen Strahlabschaltung dient. Von dort aus führt die als Single-Mode-Faser ausgeführte Lichtleitfaser 6 über einen entsprechenden Anschluß 12 zum Laserscanmikroskop 7, um dort den Laserstrahl mit mehreren Wellenlängen bzw. mehreren Laserlinien im Sinne einer Lichtpunktquelle einzukoppeln.

Hinsichtlich des erfindungsgemäßen Verfahrens wird zur Vermeidung von Wiederholungen auf den allgemeinen Teil der Beschreibung verwiesen.

Schließlich sei ganz besonders darauf hingewiesen, daß das voranstehend erörtete Ausführungsbeispiel lediglich der Erörterung der hier beanspruchten Lehre dient, diese jedoch nicht auf das Ausführungsbeispiel einschränkt.

### Bezugszeichenliste

- 1: Laser
- 2: Laser
- 3: Laser
- 4: Laser
- 5: Strahlvereiniger
- 6: Lichtleitfaser (vom Strahlvereiniger zum
Laserscanmikroskop)
- 7: Laserscanmikroskop, Mikroskop
- 8: Lichtleitfaser (vom Laser zum Strahlvereiniger)
- 9: Gehäuse
- 10: Anschluß (in das Gehäuse)
- 11: AOTF
- 12: Anschluß (zum Laserscanmikroskop)
- 13: AOM

## Patentansprüche

1. Punktlichtquette mit mindestens zwei Lasern (1,2,3,4), unterschiedlicher Wellenlänge, einem mit den Lasern (1,2,3,4) optisch verbundenen Strahlvereiniger (5), der die Laserstrahlen der mindestens zwei Laser zusammenführt, wobei einer der Laser (4) unmittelbar in den Strahlvereiniger (5) einkoppelt, und mit einer nach dem Strahlvereiniger (5) vorgesehenen ersten Lichtleitfaser (6), die die zusammengeführten Laserstrahlen transportiert, **dadurch gekennzeichnet, dass** die Punktlichtquelle ein Laserscanmikroskop (7) umfasst zu dem die erste Lichtleitfaser (6) führt, dass mindestens ein zweiter der Laser mittels einer weiteren Lichtleitfaser (8) in den Strahlvereiniger (5) einkoppelt, und dass die Laserstrahlen der mindestens zwei Laser auf die erste Lichtleiterfaser (6) justierbar sind.

2. Punktlichtquelle nach Anspruch 1, **dadurch gekennzeichnet, dass** der Strahlvereiniger (5) als dichroitischer Strahlvereiniger ausgeführt ist.

3. Punktlichtquelle nach Anspruch 1, **dadurch gekennzeichnet, dass** der Strahlvereiniger (5) als monolithische Einheit ausgeführt ist.

4. Punktlichtquelle nach einem der Ansprüche 1 bis 3, **dadurch gekennzeichnet, dass** der Strahlvereiniger (5) in einem Gehäuse (9) angeordnet ist und dass der unmittelbar in den Strahlvereiniger (5) einkoppelnde Laser (4) über einen Adapterkopf am Gehäuse (9) festgelegt ist.

5. Punktlichtquelle nach Anspruch 4, **dadurch gekennzeichnet, dass** das Gehäuse (9) aus Metall hergestellt ist.

6. Punktlichtquelle nach Anspruch 4, **dadurch gekennzeichnet, dass** das Gehäuse (9) aus Kunststoff hergestellt ist.

7. Punktlichtquelle nach einem der Ansprüche 4 bis 6, **dadurch gekennzeichnet, dass** dem Strahlvereiniger (5) vorzugsweise innerhalb des Gehäuses (9) ein AOTF, Acousto Optical Tunable Filter, (11) zur Auswahl und individuellen Einstellung der Linienleistung nachgeschaltet ist.

8. Punktlichtquelle nach einem der Ansprüche 4 bis 7, **dadurch gekennzeichnet, dass** dem Strahlvereiniger (5) vorzugsweise innerhalb des Gehäuses (9) ein AOM, Acousto Optical Modulator, (13) zur Strahlmodulation und schnellen Strahlabschaltung nachgeschaltet ist.

9. Punktlichtquelle nach einem der Ansprüche 1 bis 8, **dadurch gekennzeichnet, dass** die vom Strahlvereiniger (5) zum Mikroskop (7) führende Lichtleitfaser (6) als Single-Mode-Faser ausgeführt ist.

10. Verfahren zum Einkoppeln von mindestens zwei Lasern (1 und/oder 2 und/oder 3; 4) unterschiedlicher Wellenlänge in ein Laserscanmikroskop (7), **gekennzeichnet durch** die folgenden Schritte:
- Zusammenführen von mindestens zwei Lasern mit einem Strahlvereiniger, wobei einer der Laser (4) unmittelbar in den Strahlvereiniger (5) einkoppelt wird
- Vorsehen einer ersten Lichtleitfaser (6) nach dem Strahlvereiniger wobei die erste Lichtleitfaser (6) die zusammengeführten Laserstrahlen transportiert,
- Einkoppeln der mindestens zwei zusammengeführten Laser als gemeinsame, singuläre Punktlichtquelle in das Mikroskop (7);
- Einkoppeln des mindestens zweiten Lasers mittels einer weiteren Lichtleitfaser (8) in den Strahlvereiniger (5) einkoppelt, und
- Justieren der Laserstrahlen der mindestens zwei Laser auf die erste Lichtleifaser (6).

11. Verfahren nach Anspruch 10, **dadurch gekennzeichnet, dass** der die zwei Laser zusammenführende Strahlvereiniger in einem Gehäuse (9) untergebracht ist.

12. Verfahren nach einem der Ansprüche 10 oder 11, **dadurch gekennzeichnet, dass** vor der Einkopplung in das Mikroskop (7) in einem gekapselten Bauteil eine Strahlvereinigung stattfindet und dass von dort aus über die vorzugsweise als Single-Mode-Faser ausgeführte erste Lichtleitfaser (6) in das Mikroskop (7) eingekoppelt wird.

13. Verfahren nach Anspruch 12, **dadurch gekennzeichnet, dass** einer der Laser (4) unmittelbar und mindestens ein weiterer Laser (1 und/oder 2 und/oder 3) über die weitere Lichtleitfaser (8) in das gekapselte Bauteil einkoppelt.

14. Verfahren nach einem der Ansprüche 10 bis 13, **dadurch gekennzeichnet, dass** vor der Einkopplung in das Mikroskop (7) eine Auswahl und individuelle Einstellung der Linienleistung und/oder der Wellenlänge mittels eines AOTF, Acousto Optical Tunable Filter, (11) erfolgt.

## Claims

1. Point light source having at least two lasers (1, 2, 3, 4) of different wavelength, a beam combiner (5) which is optically connected to the lasers (1, 2, 3, 4) and joins the laser beams from the at least two lasers together, with one of the lasers (4) inputting directly into the beam combiner (5), and having a first optical fibre (6) which is provided downstream from the beam combiner (5) and transports the combined laser beams, **characterized in that** the point light source comprises a laser scanning microscope (7) to which the first optical fibre (6) leads, **in that** at least one second of the lasers inputs by means of a further optical fibre (8) into the beam combiner (5), and **in that** the laser beams from the at least two lasers can be adjusted with respect to the first optical fibre (6).

2. Point light source according to Claim 1, **characterized in that** the beam combiner (5) is a dichroic beam combiner.

3. Point light source according to Claim 1, **characterized in that** the beam combiner (5) is a monolithic unit.

4. Point light source according to one of Claims 1 to 3, **characterized in that** the beam combiner (5) is arranged in a housing (9), and **in that** the laser (4) which inputs directly into the beam combiner (5) is fixed to the housing (9) via an adapter head.

5. Point light source according to Claim 4, **characterized in that** the housing (9) is made of metal.

6. Point light source according to Claim 4, **characterized in that** the housing (9) is made of plastic material.

7. Point light source according to one of Claims 4 to 6, **characterized in that** an AOTF, Acousto Optical Tunable Filter, (11) for the selection and individual setting of the line power is connected downstream from the beam combiner (5), preferably within the housing (9).

8. Point light source according to one of Claims 4 to 7, **characterized in that** an AOM, Acousto Optical Modulator, (13) for beam modulation and rapid beam deenergization is connected downstream from the beam combiner (5) , preferably within the housing (9).

9. Point light source according to one of Claims 1 to 8, **characterized in that** the optical fibre (6) which leads from the beam combiner (5) to the microscope (7) is a single mode fibre.

10. Method for inputting from at least two lasers (1 and/or 2 and/or 3; 4) at a different wavelength into a laser scanning, microscope (7), **characterized by** the following steps:
- combination of at least two lasers with a beam combiner, with one of the lasers (4) inputting directly into the beam combiner (5),
- provision of a first optical fibre (6) downstream from the beam combiner, with the first optical fibre (6) transporting the combined laser beams,
- inputting of the at least two combined lasers as a common, singular point light source into the microscope (7);
- inputting of the at least second laser by means of a further optical fibre (8) into the beam combiner (5), and
- adjustment of the laser beams from the at least two lasers with respect to the first optical fibre (6).

11. Method according to Claim 10, **characterized in that** the beam combiner which combines the two lasers is accommodated in a housing (9).

12. Process according to either of Claims 10 and 11, **characterized in that**, prior to being input into the microscope (7), beam combination takes place in an encapsulated component, and **in that**, from there, inputting into the microscope (7) takes place via the first optical fibre (6) which is preferably a single mode fibre.

13. Process according to Claim 12, **characterized in that** one of the lasers (4) inputs directly and at least one further laser (1 and/or 2 and/or 3) inputs via the further optical fibre (8) into the encapsulated component.

14. Process according to one of Claims 10 to 13, **characterized in that**, prior to inputting into the microscope (7), selection and individual setting of the line power and/or the wavelength takes place by means of an AOTF, Acousto Optical Tunable Filter, (11).

## Revendications

1. Source lumineuse ponctuelle comprenant au moins deux lasers (1,2,3,4) de différentes longueurs d'onde, un assembleur de faisceaux (5) relié optiquement aux lasers (1,2,3,4), qui regroupe les faisceaux laser des au moins deux lasers, l'un des lasers (4) étant injecté directement dans l'assembleur de faisceaux (5), et une première fibre optique (6) disposée après l'assembleur de faisceaux (5), qui achemine les faisceaux laser regroupés, **caractérisée en ce que** la source lumineuse ponctuelle comprend un microscope à balayage laser (7), auquel mène la première fibre optique (6), **en ce qu'**au moins un deuxième des lasers est injecté, au moyen d'une autre fibre optique (8), dans l'assembleur de faisceaux (5) et **en ce que** les faisceaux laser des au moins deux lasers peuvent être alignés sur la première fibre optique (6).

2. Source lumineuse ponctuelle selon la revendication 1, **caractérisée en ce que** l'assembleur de faisceaux (5) se présente sous la forme d'un assembleur de faisceaux dichroïque.

3. Source lumineuse ponctuelle selon la revendication 1, **caractérisée en ce que** l'assembleur de faisceaux (5) se présente sous la forme d'une unité monolithique.

4. Source lumineuse ponctuelle selon l'une quelconque des revendications 1 à 3, **caractérisée en ce que** l'assembleur de faisceaux (5) est agencé dans un boîtier (9) et **en ce que** le laser (4) injecté directement dans l'assembleur de faisceaux (5) est fixé sur le boîtier (9) via une tête d'adaptateur.

5. Source lumineuse ponctuelle selon la revendication 4, **caractérisée en ce que** le boîtier (9) est fabriqué en métal.

6. Source lumineuse ponctuelle selon la revendication 4, **caractérisée en ce que** le boîtier (9) est fabriqué en matériau plastique.

7. Source lumineuse ponctuelle selon l'une quelconque des revendications 4 à 6, **caractérisée en ce qu'**un AOTF ou filtre acousto-optique réglable (11) est connecté en aval de l'assembleur de faisceaux (5), de préférence à l'intérieur du boîtier (9), pour choisir et régler individuellement les performances de ligne.

8. Source lumineuse ponctuelle selon l'une quelconque des revendications 4 à 7, **caractérisée en ce qu'**un AOM ou modulateur acousto-optique (13) est connecté en aval de l'assembleur de faisceaux (5), de préférence à l'intérieur du boîtier (9), pour moduler et déconnecter rapidement les faisceaux.

9. Source lumineuse ponctuelle selon l'une quelconque des revendications 1 à 8, **caractérisée en ce que** la fibre optique (6) menant de l'assembleur de faisceaux (5) au microscope (7) se présente sous la forme d'une fibre unimodale.

10. Procédé pour injecter au moins deux lasers (1 et/ou 2 et/ou 3;4) de différentes longueurs d'onde dans un microscope à balayage laser (7),
**caractérisé par** les étapes suivantes :
le regroupement d'au moins deux lasers avec un assembleur de faisceaux, l'un des lasers (4) étant injecté directement dans l'assembleur de faisceaux (5),
la mise en oeuvre d'une première fibre optique (6) après l'assembleur de faisceaux, la première fibre optique (6) acheminant les faisceaux laser regroupés,
l'injection des au moins deux lasers regroupés sous la forme d'une source lumineuse ponctuelle singulière commune dans le microscope (7),
l'injection du au moins deuxième laser au moyen d'une autre fibre optique (8) dans l'assembleur de faisceaux, et
l'alignement des faisceaux laser des au moins deux lasers sur la première fibre optique (6).

11. Procédé selon la revendication 10, **caractérisé en ce que** l'assembleur de faisceaux regroupant les deux lasers est logé dans un boîtier (9).

12. Procédé selon l'une quelconque des revendications 10 ou 11, **caractérisé en ce que**, avant l'injection dans le microscope (7), il se fait dans un composant encapsulé un assemblage de faisceaux et **en ce que** celui-ci est injecté dans le microscope (7) via la première fibre optique (6) qui se présente de préférence sous la forme d'une fibre unimodale.

13. Procédé selon la revendication 12, **caractérisé en ce qu'**on injecte un des lasers (4) directement et au moins un autre laser (1 et/ou 2 et/ou 3) via l'autre fibre optique (8) dans le composant encapsulé.

14. Procédé selon l'une quelconque des revendications 10 à 13, **caractérisé en ce que**, avant l'injection dans le microscope (7), on effectue une sélection et un réglage individuel des performances de ligne et/ou de la longueur d'onde au moyen d'un AOTF ou filtre acousto-optique réglable (11).
